# EUROPÄISCHE PATENTSCHRIFT

(11) **EP 2 293 102 B1**
(45) Veröffentlichungstag und Bekanntmachung des Hinweises auf die Patenterteilung: **08.10.2014**
(21) Anmeldenummer: 10171717.1
(22) Anmeldetag: 03.08.2010
(51) Int. Cl.: G01S 7/527, G01S 15/46, G01S 15/87, G01S 15/42, G01S 15/93

(54) **Verfahren und Vorrichtung zur Bestimmung der Position eines Hindernisses relativ zu einem Fahrzeug, insbesondere einem Kraftfahrzeug, zur Verwendung in einem Fahrerassistenzsystem des Fahrzeuges**
Method and device for determining the position of an obstacle relative to a vehicle, in particular a motor vehicle, for use in a driver assistance system of the vehicle
Procédé et dispositif de détermination de la position d'un obstacle par rapport à un véhicule, notamment un véhicule automobile, destiné à l'utilisation dans un système d'assistance au conducteur du véhicule

(30) Priorität: 28.08.2009 DE 102009028992
(43) Veröffentlichungstag der Anmeldung: 09.03.2011
(73) Patentinhaber: Robert Bosch GmbH, 70442 Stuttgart (DE)
(72) Erfinder: Streichert, Felix, 70173 Stuttgart (DE); Zott, Christian, 74321 Bietigheim-Bissingen (DE); Brown, Christopher, 70437 Stuttgart (DE); Reinhold, Kathrin, 81539 Muenchen (DE)

(56) Entgegenhaltungen:
- DE-A1- 3 104 993
- DE-A1- 4 023 538
- FR-A1- 2 817 973
- US-A- 5 150 336
- US-A- 5 177 710
- US-A1- 2005 007 882
- YATA T ET AL: "Wall following using angle information measured by a single ultrasonic transducer" ROBOTICS AND AUTOMATION, 1998. PROCEEDINGS. 1998 IEEE INTERNATIONAL CO NFERENCE ON LEUVEN, BELGIUM 16-20 MAY 1998, NEW YORK, NY, USA,IEEE, US LNKD- DOI:10.1109/ROBOT.1998.677372, Bd. 2, 16. Mai 1998 (1998-05-16), Seiten 1590-1596, XP010281204 ISBN: 978-0-7803-4300-9

## Beschreibung

Die Erfindung beschreibt ein Verfahren sowie eine Vorrichtung zur Bestimmung der Position eines Hindernisses relativ zu einem Fahrzeug, insbesondere einem Kraftfahrzeug, zur Verwendung zur Parkraumvermessung in einem Fahrerassistenzsystem des Fahrzeuges.

### Stand der Technik

Im Bereich der Fahrerassistenzsysteme für Kraftfahrzeuge kamen in der Vergangenheit bevorzugt Ultraschallsensoren zum Einsatz. Konventionelle Ultraschallsensoren liefern jedoch lediglich Informationen über die Entfernung eines Hindernisses relativ zu der Position des Ultraschallsensors, nicht jedoch über die relative Winkelposition des Hindernisses. Für verschiedene Fahrerassistenzsysteme, wie zum Beispiel die Parkraumvermessung oder automatische EinlAusparksysteme, ist jedoch die relative Position eines Hindernisses, also neben der Entfernung auch die Winkelposition, von entscheidender Bedeutung.

Aus der DE 40 23 538 A1 ist eine Kollisionswarneinrichtung mit einer Einrichtung zur berührungslosen Abstandsmessung bekannt, bei der mindestens zwei Ultraschallsensoren in einem vorgegebenen Abstand angeordnet sind und eine Einrichtung zur Auswertung der Laufzeiten zwischen dem Aussenden jeweils eines Ultraschallsignals und dem Empfangen eines reflektierten Ultraschallsignals des jeweils gleichen und des jeweils anderen Ultraschallsensors (Kreuzmessung) vorgesehen ist. Dabei wird mit der Einrichtung zur Auswertung der Laufzeiten geprüft, welcher von mehreren vorgegebenen mathematischen Beziehungen die jeweils aus den Laufzeiten errechneten Entfernungen gehorchen und in Abhängigkeit von dem Ergebnis der Prüfung wird eine von mehreren vorgegebenen Gleichungen zur Berechnung eines Abstandes verwendet. Auf diese Weise kann auf die Art und die relative Lage des Hindernisses geschlossen werden.

Aus der FR 2 817 973 A1 ist ein weiteres Verfahren zur Positionsbestimmung eines Objektes bekannt, bei dem eine sogenannte "Beam Forming"-Methode eingesetzt wird.

Aus T. Yata, L. Kleeman, S. Juta: "Fast-Bearing Measurement with a Single Ultrasonic Transducer", The International Journal of Robotics Research, Vol. 17, No. 11, November 1998, pp. 1202-1213, ist der Effekt bekannt, dass sich die Frequenz eines an einem Hindernis reflektierten Ultraschallsignals (Echosignal) in Abhängigkeit von dem Einfallswinkel des Echosignals verändert. Dieser Effekt ist allerdings symmetrisch, so dass man lediglich einen Absolutwert des Einfallswinkels bestimmen kann. Dieses Problem wird gemäß Yata et al. dadurch gelöst, dass ein Arbeitspunkt außerhalb des Symmetriepunktes gewählt wird, der Ultraschallsensor also in einem von 0° verschiedenen Winkel montiert wird.

Aus der US 2005/0007882 A1 ist ein Array aus mehreren akustischen Sensoren bekannt, das für bildgebende Ultraschallanwendungen eingesetzt werden kann. Dabei ist vorgesehen, dass die Abstrahlcharakteristik des Arrays mittels Frequenzmodulation zeitlich veränderbar ist ("frequency-steering"). Zusätzlich können auch "Beam-Forming" Methoden eingesetzt werden, um die Abstrahlcharakteristik anzupassen. Durch geeignete Auswerteverfahren kann ein dreidimensionales Bild des abgetasteten Bereichs berechnet werden.

Aus der DE 3104993 A1 ist ein Verfahren zur schallbasierten Richtungsortung unter Wasser bekannt. Dabei werden Schallstrahlen unterschiedlicher Frequenzen zu einem Strahl mit vorgebbarer Richtcharakteristik überlagert. Dabei sind bestimmten Winkelbereichen eindeutige Frequenzbereiche zugeordnet, so dass aus der Frequenz des Echosignals die Richtung eines Hindernisses bestimmt werden kann.

### Offenbarung der Erfindung

Die vorliegende Erfindung stellt ein Verfahren zur Bestimmung der Position eines Hindernisses relativ zu einem Fahrzeug, insbesondere einem Kraftfahrzeug, zur Verwendung zur Parkraumvermessung in einem Fahrerassistenzsystem des Fahrzeuges bereit, bei dem mindestens ein Ultraschallpuls mit einer vorgegebenen Sendefrequenz ausgesendet wird, der ausgesendete Ultraschallpuls an dem Hindernis reflektiert und als erster Echopuls durch einen ersten an dem Fahrzeug angeordneten Ultraschallsensor wieder empfangen wird, eine Empfangsfrequenz des empfangenen Echopulses bestimmt wird, ein Absolutwert eines Einfallswinkels des Echopulses in Bezug auf den ersten Ultraschallsensor in Abhängigkeit von der Empfangsfrequenz ermittelt wird, aus dem Absolutwert des Einfallswinkels des Echopulses zwei Hypothesen für eine Winkelposition des Hindernisses aufgestellt werden und eine der Hypothesen als wahr identifiziert wird mit Hilfe eines Absolutwertes eines Einfallswinkels mindestens eines weiteren an dem Hindernis reflektierten Echopulses oder mit Hilfe eines Absolutwertes eines Einfallswinkels in Bezug auf einen zweiten an dem Fahrzeug angeordneten Ultraschallsensor, welcher den ersten Echopuls auch empfangen hat.

Die vorliegende Erfindung stellt außerdem eine Vorrichtung zur Bestimmung der Position eines Hindernisses relativ zu einem Fahrzeug, insbesondere einem Kraftfahrzeug, zur Verwendung in einem Fahrerassistenzsystem des Fahrzeuges bereit mit mindestens einem Ultraschallsender zum Aussenden von mindestens zwei Ultraschallpulsen mit einer vorgegebenen Sendefrequenz, mindestens einem Ultraschallempfänger zum Empfangen von an dem Hindernis reflektierten Echopulsen und einer Auswerteeinheit zum Bestimmen der Empfangsfrequenzen der empfangenen Echopulse, zum Ermitteln von Absolutwerten von Einfallswinkeln der Echopulse in Abhängigkeit von den jeweiligen Empfangsfrequenzen, zur Aufstellung von zwei Hypothesen für eine Winkelposition des Hindernisses aus dem Absolutwert des Einfallswinkels eines ersten Echopulses und zur Identifizierung einer der Hypothesen als wahr mit Hilfe des Absolutwertes des Einfallswinkels eines zweiten und/oder gegebenenfalls weiterer Echopulse.

Durch die Ausnutzung der Abhängigkeit der Empfangsfrequenz von dem Einfallswinkel des Echopulses ist es im Gegensatz zu bekannten Trilaterations-Methoden möglich, die Winkelposition eines Hindernisses mit Hilfe eines einzigen Ultraschallsensors zu bestimmen. Außerdem werden Mehrdeutigkeiten, wie sie bei Verwendung von bekannten Trilaterationsmethoden unter bestimmten Bedingungen auftreten, vermieden. Die Problematik, dass die Auswertung der Empfangsfrequenz zunächst nur die Ermittlung eines Absolutwertes des Einfallswinkels eines Echopulses ermöglicht, wird erfindungsgemäß dadurch gelöst, dass der reale Einfallswinkel entweder mit Hilfe eines zweiten Echopulses oder mit Hilfe eines zweiten Ultraschallsensors, welcher den ersten Echopuls aus einem anderen Winkel empfängt, verifiziert wird. Die Verifizierung basiert dabei in beiden Fällen erfindungsgemäß auf einer zweiten Messung aus einer veränderten Position. Die Positionsveränderung kann dabei durch eine Bewegung des Fahrzeuges und/oder durch Verwendung eines zweiten Ultraschallsensors bewirkt werden. Eine Verschiebung des Arbeitspunktes aus dem Symmetriepunkt einer Empfangsfrequenz-Einfallswinkel-Kennlinie ist dabei nicht erforderlich. Somit trägt das erfindungsgemäße Verfahren und die erfindungsgemäße Vorrichtung zu einer deutlichen Verbesserung der Qualität der Positionsbestimmung eines Hindernisses relativ zu einem Fahrzeug und damit zur Zuverlässigkeit von Fahrerassistenzsystemen bei.

Gemäß einer Ausführungsform der Erfindung kann der mindestens eine weitere Ultraschallpuls durch den ersten Ultraschallsensor oder auch durch einen anderen an dem Fahrzeug angeordneten Ultraschallsensor ausgesendet werden.

Während die Verwendung nur eines einzigen Ultraschallsensors vor allem einen Kostenvorteil bietet, lässt sich durch die Verwendung mehrerer Ultraschallsensoren die Position des Fahrzeuges auch schon durch einen einzigen Ultraschallpuls bestimmen. Außerdem bietet die Verwendung mehrerer Ultraschallsensoren weitere Auswertungsmöglichkeiten, welche die Zuverlässigkeit der Positionsbestimmung weiter erhöhen. Des Weiteren ist es bei bekannten uftraschallbasierten Abstandsmesssystemen für Kraftfahrzeuge üblich, in manchen Bereichen, wie zum Beispiel dem Front- und Heckbereich, mehrere benachbarte Ultraschallsensoren vorzusehen, wohingegen im Seitenbereich häufig nur ein erster Ultraschallsensor im vorderen Bereich und ein zweiter Ultraschallsensor im hinteren Bereich des Fahrzeuges vorgesehen sind. Da das erfindungsgemäße Verfahren unabhängig von der Anzahl und der Anordnung der Ultraschallsensoren am Fahrzeug eingesetzt werden kann, ist eine Qualitätsverbesserung bei der Positionsbestimmung erreichbar, ohne dass zusätzliche Ultraschallsensoren, im Vergleich zu heute üblichen Systemen, vorzusehen sind.

Gemäß einer weiteren Ausführungsform der Erfindung werden die Absolutwerte der Einfallswinkel in Abhängigkeit von der Empfangsfrequenz auf Basis eines abgespeicherten Kennfeldes ermittelt, wobei vorteilhaft für jeden Ultraschallsensor ein individuelles Kennfeld abgespeichert ist.

Ein Kennfeld stellt eine besonders einfache Basis zur Bestimmung der Absolutwerte der Einfallswinkel dar. Durch das Abspeichern individueller Kennfelder für jeden Ultraschallsensor ist auch die Berücksichtigung individueller Unterschiede der verwendeten Sensoren, zum Beispiel durch Fertigungs- und/oder Einbautoleranzen, gewährleistet.

Gemäß einer Ausführungsform der Erfindung werden die Kennfelder zur Bestimmung der Absolutwerte der Einfallswinkel im Vorfeld der Inbetriebnahme empirisch mit Hilfe eines Regressionsmodels ermittelt.

Mit Hilfe eines Regressionsmodels lässt sich die Beziehung zwischen Empfangsfrequenz und Einfallswinkel mit vertretbarem Aufwand und ausreichender Genauigkeit bestimmen.

Erfindungsgemäß wird neben der Winkelposition auch der Abstand des Hindernisses relativ zu dem Fahrzeug in Abhängigkeit von gemessenen Signallaufzeiten der Echopulse bestimmt, aus dem Absolutwert des Einfallswinkels des ersten Echopulses und dem Abstand des Hindernisses werden dann zwei Hypothesen für die Position des Hindernisses aufgestellt und eine der Hypothesen als wahr identifiziert mit Hilfe eines Absolutwertes eines Einfallswinkels mindestens eines weiteren an dem Hindernis reflektierten Echopulses oder mit Hilfe eines Absolutwertes eines Einfallswinkels bezüglich eines zweiten an dem Fahrzeug angeordneten Ultraschallsensors, welcher den ersten Echopuls auch empfangen hat. Aus Abstand und Winkelposition kann somit die exakte Position des Hindernisses bestimmt werden.

Neben der durch den Einfallswinkel bewirkten Frequenzverschiebung treten auch weitere Effekte, wie zum Beispiel der Doppler-Effekt, auf, welche zu einer Änderung der Empfangsfrequenz im Verhältnis zur Sendefrequenz führen können. Um eine hohe Genauigkeit bei der Positionsbestimmung eines Hindernisses zu gewährleisten, ist es deshalb vorteilhaft, Frequenzverschiebungen, welche durch andere Effekte, wie zum Beispiel den Doppler-Effekt, hervorgerufen werden, bei der Bestimmung der Winkelposition des Hindernisses dahingehend zu berücksichtigen, dass die bestimmte Empfangsfrequenz um den Wert korrigiert wird, der auf andere Effekte zurückzuführen ist, bevor der Einfallswinkel in Abhängigkeit von der Empfangsfrequenz, zum Beispiel aus dem Kennfeld, ermittelt wird.

Bei stehenden Hindernissen wird gemäß einer Ausführungsform der Erfindung die Geschwindigkeit des Fahrzeuges bestimmt, die aufgrund des Doppler-Effektes durch die Fahrzeuggeschwindigkeit bewirkte Frequenzverschiebung berechnet und die durch den Doppler-Effekt bewirkte Frequenzverschiebung bei der Ermittlung der Absolutwerte der Einfallswinkel der Echopulse berücksichtigt.

Bei bewegten Hindernissen wird gemäß einer weiteren Ausführungsform der Erfindung die Relativgeschwindigkeit zwischen dem Fahrzeug und dem Hindernis bestimmt, die aufgrund des Doppler-Effektes durch die Relativgeschwindigkeit bewirkte Frequenzverschiebung berechnet und die durch den Doppel-Effekt bewirkte Frequenzverschiebung bei der Ermittlung der Absolutwerte der Einfallswinkel der Echopulse berücksichtigt.

Eine weitere Ausführungsform der Erfindung sieht vor, dass zur Wahr-Identifizierung einer der Hypothesen ein Trackingverfahren, insbesondere Multi-Hypothesen-Tracking, eingesetzt wird.

Tracking-Verfahren stellen eine besonders zuverlässige Plausibilisierung einer Hypothese sicher und sind damit, insbesondere bei Verwendung nur eines Ultraschallsensors, gut geeignet, eine der beiden möglichen Positionshypothesen zu verifizieren, also als wahr zu identifizieren.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Fig. 1: eine schematische Draufsicht auf ein Kraftfahrzeug mit einer erfin- dungsgemäßen Vorrichtung zur Bestimmung der Position eines Hin- dernisses,
- Fig. 2: ein schematisches Ablaufdiagramm eines erfindungsgemäßen Ver- fahrens,
- Fig. 3: eine schematische Darstellung der Abhängigkeit einer Empfangsfre- quenz von einem Einfallswinkels eines Echosignals,
- Fig. 4: eine schematische Darstellung von Positionshypothesen, wie sie sich beim Einsatz eines erfindungsgemäßen Verfahrens ergeben,
- Fig. 5a-5b: schematische Darstellungen einer erfindungsgemäßen Bestimmung der Position eines Hindernisses bei Verwendung eines einzelnen Ult- raschallsensors,
- Fig. 6a-6c: schematische Darstellungen der erfindungsgemäßen Bestimmung
- der: Position eines Hindernisses bei Verwendung von zwei Ultra- schallsensoren und
- Fig. 7 ein: schematisches Blockschaltbild einer Schaltungsanordnung zur er- findungsgemäßen Auswertung eines Echopulses.

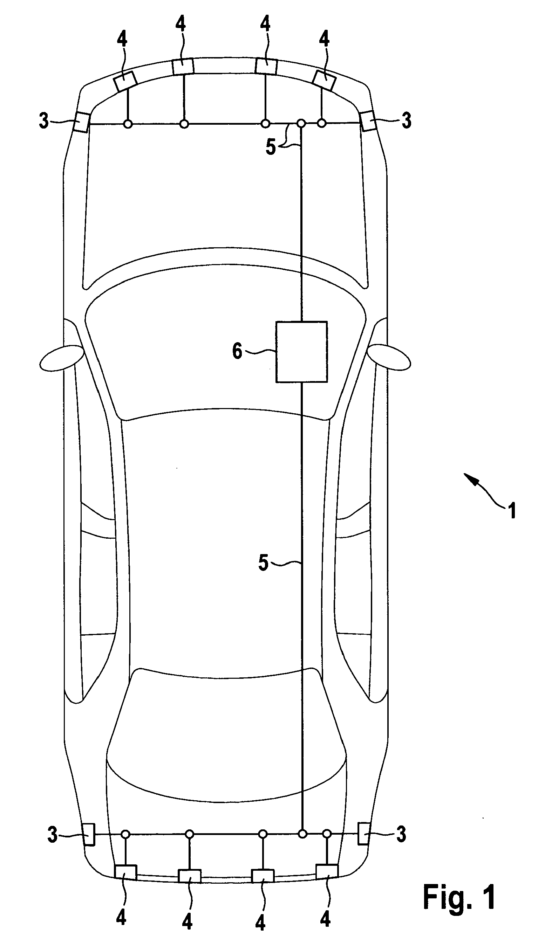

In Fig. 1 ist ein Kraftfahrzeug 1 dargestellt, welches mit einer erfindungsgemäßen Vorrichtung zur Bestimmung der Position eines Hindernisses relativ zu dem Kraftfahrzeug ausgestattet ist. Die Vorrichtung weist zwei linksseitig und zwei rechtsseitig des Kraftfahrzeugs angeordnete Ultraschallsensoren 3 auf. Im Frontbereich sowie im Heckbereich des Kraftfahrzeuges 1 sind weitere Ultraschallsensoren 4 angeordnet. Die Ultraschallsensoren 3 und 4 sind über Signalleitungen 5, die zum Beispiel als CAN-Bus oder auch als Punkt-zu-Punkt-Verbindung ausgeführt sein können, mit einer Auswerteeinheit 6 zum Auswerten der Sensorsignale verbunden. Eine nicht dargestellte übergeordnete Steuereinheit, in welche auch die Auswerteeinheit 6 integriert sein kann, steuert das Aussenden von Ultraschallpulsen mittels der Ultraschallsensoren 3 und 4. Die Ultraschallsensoren weisen zum Beispiel jeweils ein Piezoelement auf, welches durch elektrische Anregung eine Membran zum Aussenden von Ultraschallwellen anregt. Die Ultraschallpulse werden von der Oberfläche eines möglicherweise in der Fahrzeugumgebung befindlichen Hindernisses reflektiert und von den Ultraschallsensoren als Echopulse wieder empfangen. Die übergeordnete Steuereinheit kann dazu die Ultraschallsensoren 3 und 4 in einen Empfangsmodus schalten. In dem Empfangsmodus regen die reflektierten Ultraschallwellen die Membran der Ultraschallsensoren zu einer Schwingung an. Diese Schwingung kann über das Piezoelement in elektrische Signale umgewandelt werden.

Neben der beschriebenen Ausführungsform der Ultraschallsensoren 3 und 4 als Ultraschallwandler, die eine Umschaltung zwischen Sende- und Empfangsbetrieb erlauben, sind auch Ultraschallsensoren verwendbar, die getrennte Ultraschallsender und - empfänger aufweisen. Die Auswerteelektronik kann, wie dargestellt, zentral angeordnet sein oder auch zumindest teilweise dezentral den einzelnen Ultraschallsensoren 3 und/oder 4 zugeordnet sein.

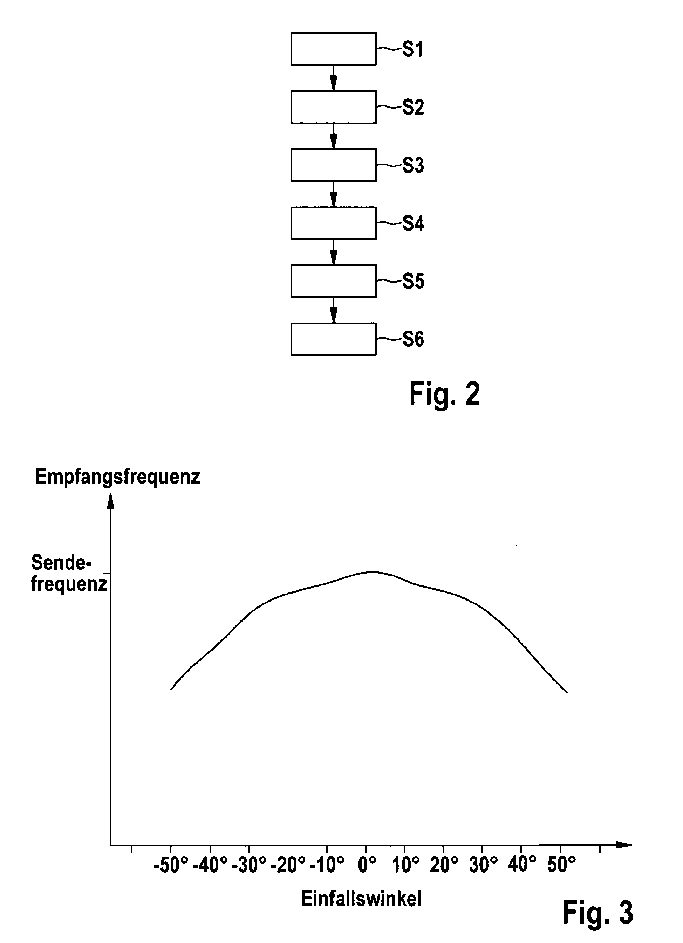

Ein Verlauf des erfindungsgemäßen Verfahrens ist in Fig. 2 schematisch in Form eines Flussdiagramms dargestellt. In einem Schritt S1 werden zwei Ultraschallpulse mit einer vorgegebenen Sendefrequenz ausgesendet. Die Ultraschallpulse können dabei sequentiell von einem einzigen Ultraschallsensor 3 oder 4 oder alternativ dazu auch von zwei verschiedenen Ultraschallsensoren, vorzugsweise zwei benachbarten Ultraschallsensoren ausgesendet werden. In diesem Fall kann das Aussenden der Ultraschallpulse auch zeitlich parallel oder zumindest überlappend erfolgen. Die Sendefrequenz kann dabei auch variabel sein, muss aber für jeden einzelnen Echopuls bekannt sein.

In einem Schritt S2 werden die an einem Hindernis reflektierten Ultraschallpulse als Echopulse wieder empfangen. Als Hindernis sei dabei jegliches Objekt im Umfeld des Kraftfahrzeuges verstanden, welches geeignet ist, die Bewegung des Kraftfahrzeugs zu behindern. Die Echopulse können sowohl von dem Ultraschallsensor empfangen werden, welcher den zugehörigen Ultraschallpuls ausgesendet hat, als auch von einem anderen, an dem Kraftfahrzeug angeordneten Ultraschallsensor. Auch ist es für die Anwendung der Erfindung unerheblich, ob beide Echopulse durch den gleichen Ultraschallsensor oder auch durch zwei verschiedene Ultraschallsensoren empfangen werden. Wobei es beim Empfang durch verschiedene Ultraschallsensoren ausreichend ist, abweichend von der dargestellten Ausführungsform, im Schritt S1 nur einen Ultraschallpuls auszusenden, welcher dann im Schritt S2 an dem Hindernis reflektiert wird und von mindestens zwei Ultraschallsensoren empfangen wird. Für die Erfindung ist es nur wichtig, dass ein Echopuls aus zwei verschiedenen Positionen empfangen wird, so dass sich unterschiedliche Hypothesen für den Einfallswinkel des jeweiligen Echopulses ergeben.

In einem Schritt S3 werden die Empfangsfrequenzen der Echopulse bestimmt. Wie bereits erwähnt, werden bei Ultraschallsensoren auf piezoelektrischer Basis mechanische Membranschwingungen in elektrische Impulse gewandelt. Auf Basis dieser Signale werden die Empfangsfrequenzen der reflektierten Echopulse durch ein Frequenzanalyse-Verfahren geschätzt. Dabei kann das Frequenzanalyse-Verfahren, zum Beispiel eine Fourier-Transformation, sowohl auf ein analoges oder auch auf ein daraus erzeugtes digitales Echosignal angewendet werden.

In einem Schritt S4 werden in Abhängigkeit von den jeweiligen Empfangsfrequenzen Absolutwerte von Einfallswinkeln der Echopulse relativ zu den empfangenden Ultraschallsensoren ermittelt. Dazu wird vorteilhaft ein Kennfeld eingesetzt, wie es beispielhaft in Fig. 3 dargestellt ist.

Fig. 3 zeigt ein Kennfeld, bei welchem die Empfangsfrequenz des Echopulses über dem Einfallswinkel des Echopulses aufgetragen ist. Der Kurvenverlauf ist dabei symmetrisch um einen Einfallswinkel von 0°, so dass sich aus der Empfangsfrequenz lediglich ein Absolutwert eines Einfallswinkels ermitteln lässt. Das Kennfeld kann im Vorfeld der Inbetriebnahme zum Beispiel empirisch mit Hilfe eines Regressionsmodels ermittelt werden. Dabei ist es vorteilhaft, für jeden Ultraschallsensor ein individuelles Kennfeld zu erzeugen, das den individuellen Eigenschaften des Sensors, wie konkreten Bauteiltoleranzen und Einbaubedingungen, Rechnung trägt. Zur weiteren Verwendung werden die Kennfelder in dem Kraftfahrzeug, zum Beispiel in der Auswerteeinheit 6, abgespeichert.

In einem Schritt S5 werden aus dem Absolutwert des Einfallswinkels und der Distanz basierend auf der Laufzeitmessung eines ersten empfangenen Echopulses zwei Hypothesen für eine Position des Hindernisses aufgestellt, welche dem Absolutwert mit negativem bzw. positivem Vorzeichen entsprechen. Um möglichen Ungenauigkeiten bei der Ermittlung der Empfangsfrequenz und des Absolutwertes des Einfallswinkels Rechnung zu tragen, können die beiden Hypothesen auch einen Winkelbereich um den ermittelten Absolutwert, mit jeweils negativem bzw. positivem Vorzeichen umfassen.

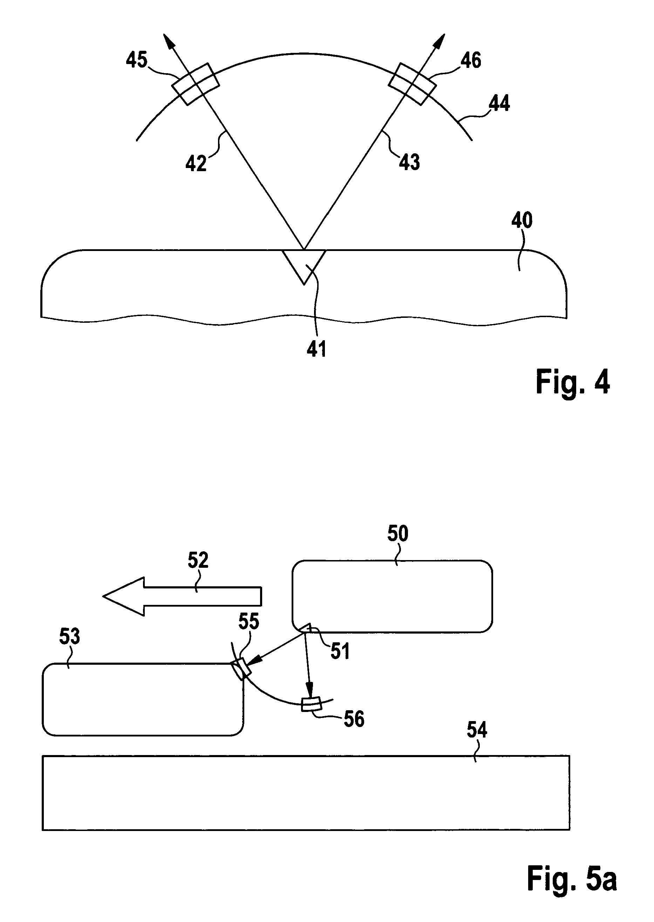

In Figur 4 sind schematisch zwei für ein Hindernis erfindungsgemäß aufgestellte Hypothesen dargestellt. An einem nur angedeuteten Heck eines Fahrzeuges 40 ist ein Ultraschallsensor 41 angeordnet. Ausgehend von dem Ultraschallsensor repräsentieren zwei Pfeile 42 und 43 den aus der Empfangsfrequenz ermittelten Absolutwert des Einfallswinkels jeweils mit negativem bzw. positivem Vorzeichen. Ein Kreisbogen 44 deutet einen Abstand des Hindernisses relativ zu dem Fahrzeug 40 an. Dieser Abstand kann auf Basis einer gemessenen Signallaufzeit eines Echopulses ermittelt werden. Die beiden Hypothesen, welche in diesem Fall aus dem Absolutwert des Einfallswinkels des Echopulses und dem Abstand des Hindernisses aufgestellt wurden, sind durch Kreisringsektoren 45 und 46 angedeutet, welche einen Bereich um die Schnittpunkte des Abstands-Kreisbogens mit den Richtungsvektoren der beiden möglichen Werte des Einfallswinkels umfassen.

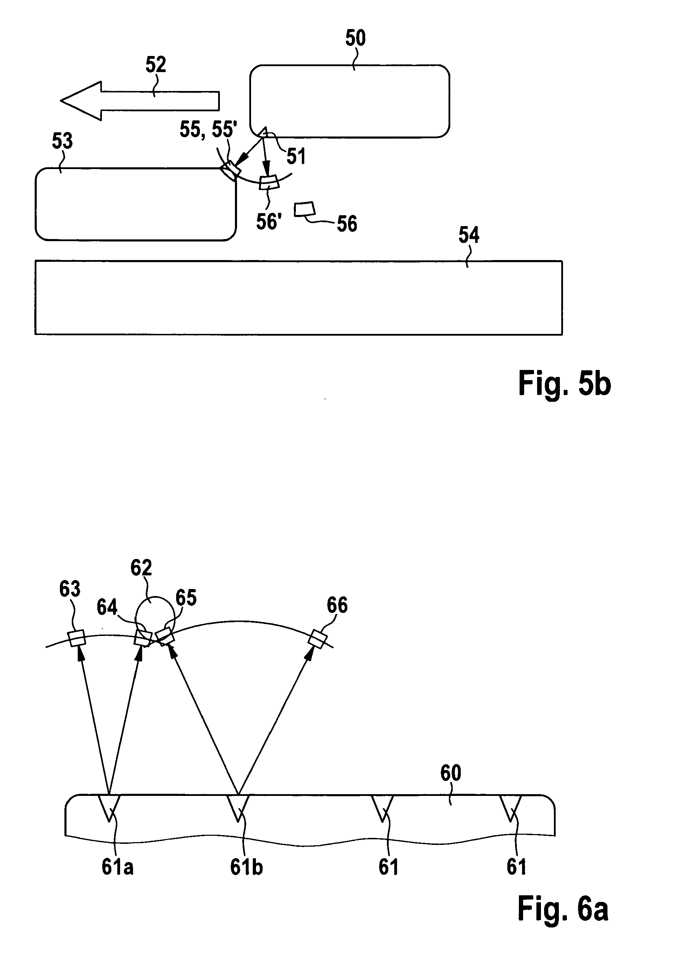

Schließlich wird in einem Schritt S6 eine der Hypothesen mit Hilfe des Absolutwertes des Einfallswinkels eines zweiten und/oder gegebenenfalls weiterer Echopulse als wahr identifiziert. Dieser Verfahrensschritt wird im Folgenden anhand der Fig. 5a-5b und 6a-6c detailliert erläutert.

In den Fig. 5a-5b ist schematisch eine erfindungsgemäße Bestimmung der Position eines Hindernisses relativ zu einem Fahrzeug 50 zur Verwendung in einem Fahrerassistenzsystem, in diesem Fall einer Parkraumvermessung, dargestellt, wobei an dem Fahrzeug 50 nur ein einzelner Ultraschallsensor 51 angeordnet ist. Für die Parkraumvermessung ist es nötig, in der Vorbeifahrt die Begrenzung einer Parklücke zu bestimmen. Insbesondere bei Querparklücken ist dabei eine hohe Positioniergenauigkeit erforderlich. Die Fahrtrichtung des Kraftfahrzeugs 50 ist durch einen Pfeil 52 angedeutet. Als Hindernisse sind beispielhaft und schematisch ein parkendes Fahrzeug 53 sowie eine Mauer oder Bordsteinkante 54 dargestellt. Fig. 5a zeigt die Situation nach Empfang eines an dem parkenden Fahrzeug 53 reflektierten ersten Echopulses, nach Ermittlung des Absolutwertes des Einfallswinkels des ersten Echopulses und darauf basierendem Aufstellen von zwei Hypothesen für die Position des Hindernisses. Als mögliche Positionen ergeben sich die wiederum durch Kreisringsegmente angedeuteten Bereiche 55 und 56. Dabei wurde wiederum der durch einen Kreisbogen 57 angedeutete, zusätzlich ermittelte Abstand des Hindernisses bei der Aufstellung der Hypothesen mit berücksichtigt. Aufgrund der Symmetrie des Kennfeldes ist nach Auswerten nur eines Echopulses keine weitere Einschränkung der realen Position, also keine Bestimmung des richtigen Vorzeichens des Einfallswinkels möglich.

In Fig. 5b ist die Situation nach dem Aussenden und dem Auswerten eines zweiten Ultraschallpulses dargestellt, wobei sich das Fahrzeug in Fahrtrichtung bewegt hat, so dass sich die Position des Ultraschallsensors relativ zu dem parkenden Fahrzeug verändert hat. Dabei ergeben sich zwei neue Positionshypothesen - angedeutet durch die Bereiche 55' und 56', wobei eine der neuen Positionshypothesen, nämlich 55' mit der ersten Positionshypothese 55 zusammenfällt oder zumindest in unmittelbarer Nähe der ersten Positionshypothese 55 zu liegen kommt. Die zweite neue Positionshypothese 56' liegt jedoch relativ weit von der ersten Positionshypothese 56 entfernt. Damit kann die ursprüngliche Positionshypothese 55 als wahr identifiziert werden, wohingegen die ursprüngliche Hypothese 56 verworfen werden kann. Durch die Auswertung weiterer Echopulse kann diese Verifizierung einer Positionshypothese weiter verbessert werden. Zu diesem Zweck besonders geeignet sind sogenannte Tracking-Verfahren, wie zum Beispiel das unter dem Kurzname MHT bekannte Multiple Hypothesis Tracking, welches zum Beispiel in I. J. Cox, J. J. Leonard, "Modelling a Dynamic Environment Using a Bayesian Multiple Hypothesis Approach", Artificial Intelligence, Vol. 66, No. 2, pages 311-344, 1994, beschrieben ist.

Sind an einem Fahrzeug mehrere Ultraschallsensoren angeordnet, was in der Regel häufig im Front- und/oder Heckbereich eines Kraftfahrzeugs der Fall ist, so ergeben sich weitere Möglichkeiten, aus den Positionshypothesen eines einzelnen Echopulses die exakte Position eines Hindernisses zu bestimmen. Die Fig. 6a-6c zeigen eine erfindungsgemäße Positionsbestimmung bei Verwendung von mehreren Ultraschallsensoren.

Für automatische Ein-/Ausparkfunktionen ist es nicht nur nötig, Hindernisse zu detektieren, sondern auch Hindernisse zu klassifizieren hinsichtlich der Frage, ob die Hindernisse innerhalb oder außerhalb des anvisierten Fahrschlauches liegen und infolge dessen der Einparkvorgang abgebremst werden muss oder man an einem Hindernis ohne Eingriffe vorbeifahren kann.

Gemäß Fig. 6a sind an einem nur angedeuteten Heck 60 eines Kraftfahrzeugs 61 vier Ultraschallsensoren 62 angeordnet, wobei in dem ausgeführten Beispiel nur die beiden Ultraschallsensoren 61 a und 61 b genutzt werden. Als Hindernis ist beispielhaft ein Pfosten 62 dargestellt. Aus einer Auswertung des von einem ersten Ultraschallsensor 61 a empfangenen, an dem Pfosten 62 reflektierten Echopulses ergeben sich für den Pfosten 62 zwei Positionshypothesen 63 und 64. Die Positionshypothesen sind dabei wiederum unter Berücksichtigung einer Abstandsinformation als Kreisringsegmente dargestellt. Auch für den zweiten Ultraschallsensor 61 b ergeben sich basierend auf der Auswertung des von dem Pfosten 62 reflektierten Echopulses zwei Positionshypothesen 65 und 66, wobei die Positionshypothese 65 unmittelbar benachbart zur Positionshypothese 64 zu liegen kommt, wohingegen die Positionshypothese 66 weit ab von den ursprünglichen Hypothesen liegt. Die Positionshypothese 64 kann damit als wahr identifiziert werden, wohingegen die Positionshypothesen 63 und 66 als falsch verworfen werden kann.

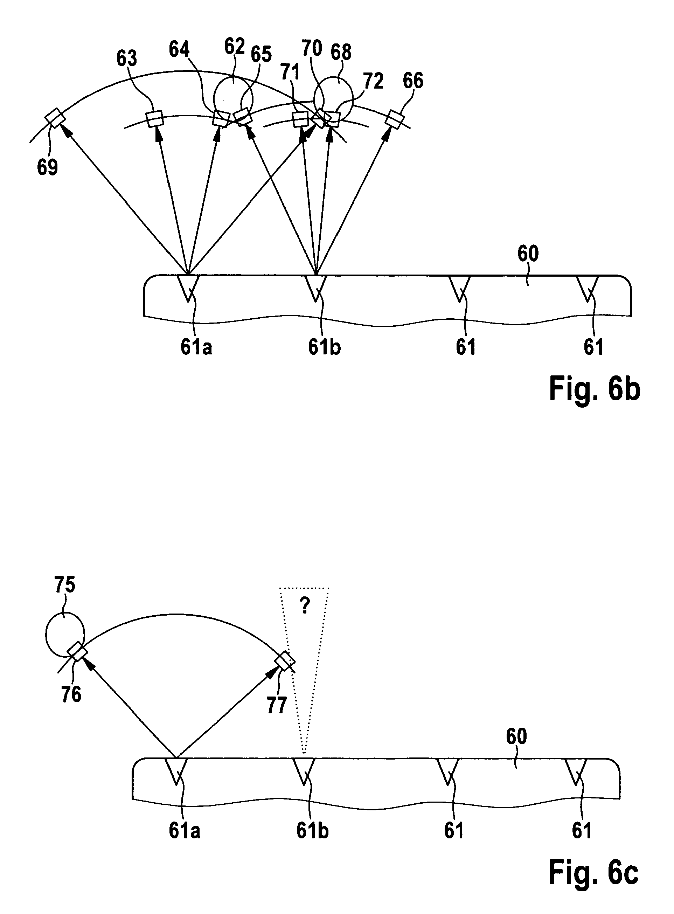

Das Szenario gemäß Figur 6b unterscheidet sich von demjenigen gemäß Figur 6a lediglich dadurch, dass ein zweites Hindernis in Form eines zweiten Pfostens 68 hinzugekommen ist. Aus einer Auswertung des von einem ersten Ultraschallsensor 61 a empfangenen, an dem ersten Pfosten 62 reflektierten Echopulses ergeben sich für den ersten Pfosten 62 die bereits unter Bezugnahme auf Figur 6a erläuterten zwei Positionshypothesen 63 und 64. Aus einer analogen Auswertung des von dem ersten Ultraschallsensor 61 a empfangenen, an dem zweiten Pfosten 68 reflektierten Echopulses ergeben sich für den zweiten Pfosten 68 zwei Positionshypothesen 69 und 70. Alle Positionshypothesen sind dabei wiederum unter Berücksichtigung einer Abstandsinformation als Kreisringsegmente dargestellt. Auch für den zweiten Ultraschallsensor 61 b ergeben sich basierend auf der Auswertung der von den beiden Pfosten 62 und 63 reflektierten Echopulse jeweils zwei Positionshypothesen 65 und 66 bzw. 71 und 72. Dabei kommt wiederum jeweils eine dieser Positionshypothesen, nämlich die Positionshypothese 65 für den ersten Pfosten 62 bzw. 72 für den zweiten Pfosten 68, in unmittelbarer Nähe einer Positionshypothese des ersten Ultraschallsensors, nämlich der Positionshypothese 64 bzw. 70, zu liegen. Diese Positionshypothesen 64 und 70 können damit als wahr identifiziert werden, wohingegen die Positionshypothesen 63 und 69 als falsch verworfen werden können.

Insbesondere bei mehreren Hindernissen treten bei Anwendung bekannter Trilaterationsverfahren Mehrdeutigkeiten auf, da sich die Kreisbögen, welche die Abstände der Hindernisse von den Ultraschallsensoren charakterisieren mehrfach schneiden. Diese Mehrdeutigkeiten werden durch Anwendung des erfindungsgemäßen Verfahrens umgangen.

In Fig. 6c ist ein Hindernis 75 dargestellt, welches zwar im Erfassungsbereich des Ultraschallsensors 61 a, aber nicht mehr im Erfassungsbereich des Ultraschallsensors 61 b liegt. In diesem Fall kann der fehlende Echopuls des Ultraschallsensors 61 b (angedeutet durch ein Kreissegment mit einem "?") dazu genutzt werden, die, in Fig. 6c links dargestellte Positionshypothese 76 als wahr zu identifizieren, da andernfalls ein durch den Ultraschallsensor 61 b zu empfangender Echopuls zu erwarten gewesen wäre. Die Positionshypothese 77 kann damit verworfen werden.

Auch im Fall mehrerer Ultraschallsensoren kann die Qualität Verifizierung einer Positionshypothese durch Auswertung weiterer Echopulse weiter erhöht werden.

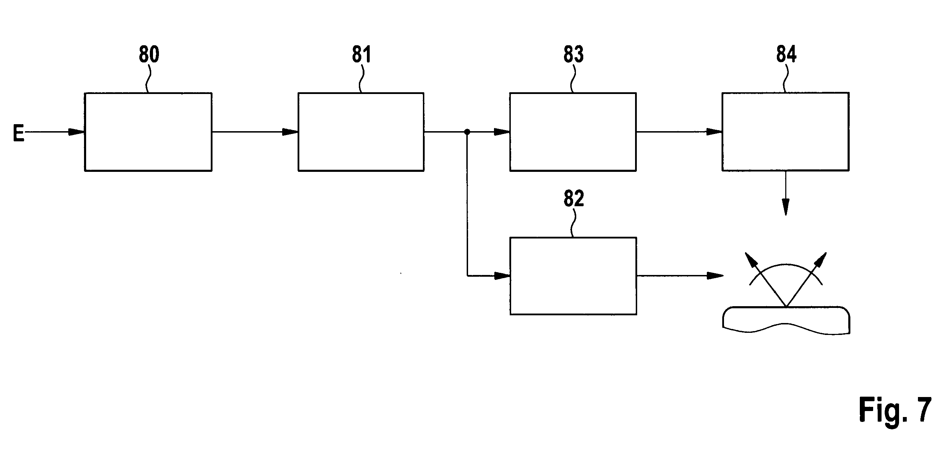

In Figur 7 ist ein schematisches Blockschaltbild einer beispielhaften Schaltungsanordnung zur erfindungsgemäßen Auswertung eines Echopulses dargestellt. Ein empfangenes Echosignal E wird zunächst mit Hilfe eines A/D-Wandlers 80 digitalisiert. In der digitalisierten Zeitreihe werden in einem Block "Echo-Detektion" 81 mittels Schwellwerten und/oder mittels Korrelationsanalyse Echopulse bestimmt. Für die bestimmten Echopulse werden einerseits in einem Block "Distanzschätzung" 82 der Abstand des Hindernisses relativ zu dem Fahrzeug durch Auswertung der Signallaufzeiten bestimmt. Andererseits wird für jeden Echopuls in einem Block "Frequenzanalyse" 83 die Empfangsfrequenz mit Hilfe bekannter Frequenzanalyseverfahren ermittelt. Basierend auf einem vorzugsweise sensor-individuellen Kennfeld 84 wird dann auf den Absolutwert des Einfallswinkels des jeweiligen Echopulses geschlossen. Kombiniert mit der Abstandsschätzung erhält man schließlich zwei alternative Positionshypothesen, von denen eine auf Basis der Auswertung weiterer Echopulse verifiziert werden kann. Für die Anwendung der Erfindung ist es dabei unerheblich, ob die in Figur 7 dargestellten Funktionsblöcke vollständig in die Auswerteschaltung 6 oder auch teilweise unmittelbar in die Ultraschallsensoren integriert sind.

Neben dem erfindungsgemäß genutzten Effekt einer Verschiebung der Empfangsfrequenz im Verhältnis zur Sendefrequenz in Abhängigkeit des Einfallswinkels des Echopulses, gibt es weitere Effekt, wie z.B. den Doppler-Effekt, die zu einer Frequenzverschiebung führen. Um eine exakte Bestimmung des Absolutwertes des Einfallswinkels und damit der Position eines Hindernisses zu bestimmen sind diese weiteren Effekte möglichst auszuschließen oder zu kompensieren. Dazu kann die Eigengeschwindigkeit des Fahrzeuges im Falle eines stehenden Hindernisses oder die Relativgeschwindigkeit zwischen dem Fahrzeug und dem Hindernis im Falle eines bewegten Hindernisse ermittelt werden und abhängig davon die durch den Doppler-Effekt verursachte Frequenzverschiebung bestimmt werden. Diese Frequenzverschiebung kann dann bei der Ermittlung des Absolutwertes des Einfallswinkels berücksichtigt und damit der Doppler-Effekt kompensiert werden.

Neben der Parkraumvermessung oder einer automatischen Ein-/Ausparkfunktion sind das erfindungsgemäße Verfahren und die erfindungsgemäße Vorrichtung selbstverständlich auch für beliebige weitere Fahrerassistenzsysteme, bei denen die Position eines Hindernisses eine Rolle spielt, einsetzbar. So könnte beispielsweise eine Kollisionswarnung und/oder Kollisionsfolgenminderung durch Einsatz des erfindungsgemäßen Verfahrens deutlich verbessert werden.

## Patentansprüche

1. Verfahren zur Bestimmung der Position eines Hindernisses (53; 62; 68; 75) relativ zu einem Fahrzeug (1; 40; 50; 60), insbesondere einem Kraftfahrzeug, zur Verwendung zur Parkraumvermessung in einem Fahrerassistenzsystem des Fahrzeuges (1; 40; 50; 60) bei dem
- mittels eines an dem Fahrzeug (1; 40; 50; 60) angeordneten Ultraschallsensors (3; 4; 41; 51; 61) mindestens ein Ultraschallpuls mit einer vorgegebenen Sendefrequenz ausgesendet wird,
- der ausgesendete Ultraschallpuls an dem Hindernis (53; 62; 68; 75) reflektiert und als erster Echopuls durch einen ersten an dem Fahrzeug (1; 40; 50; 60) angeordneten Ultraschallsensor (3; 4; 41; 51; 61) wieder empfangen wird,
- eine Empfangsfrequenz des empfangenen Echopulses bestimmt wird,
- ein Absolutwert eines Einfallswinkels des Echopulses in Bezug auf den ersten Ultraschallsensor (3; 4; 41; 51; 61) in Abhängigkeit von der Empfangsfrequenz ermittelt wird,
- die Signallaufzeit des Echopulses gemessen wird,
- aus der Signallaufzeit der Abstand des Hindernisses (53; 62; 68; 75) relativ zu dem Fahrzeug (1; 40; 50; 60) bestimmt wird,
**dadurch gekennzeichnet, dass**
- aus dem Absolutwert des Einfallswinkels des Echopulses und aus dem Abstand des Hindernisses relativ zu dem Fahrzeug (1; 40; 50; 60) zwei Hypothesen (45, 46, 55, 56, 63, 64) für eine Position des Hindernisses (53; 62; 68; 75), auf Basis des ermittelten Absolutwerts des Einfallswinkels und der beiden möglichen Vorzeichen des Einfallswinkels aufgestellt werden und
- durch eine zweite Messung eine der Hypothesen (45, 46, 55, 56, 63, 64) als wahr identifiziert wird
a) durch Bestimmung eines Absolutwertes eines Einfallswinkels mindestens eines weiteren an dem Hindernis (53; 62; 68; 75) reflektierten Echopulses sowie eines weiteren auf Basis einer gemessenen Signallaufzeit des weiteren Echopulses ermittelten Abstands des Hindernisses relativ zu dem Fahrzeug, wobei die zweite Messung bei einer durch eine Bewegung des Fahrzeugs veränderten Position des ersten Ultraschallsensors (3; 4; 41; 51; 61) erfolgt, wobei die Änderung der Position des ersten Ultraschallsensors (3; 4; 41; 51; 61) im Vergleich zur ersten Messung bekannt ist, oder
b) durch Bestimmung eines Absolutwertes eines Einfallswinkels sowie eines auf Basis einer gemessenen Signallaufzeit eines Echopulses ermittelten Abstands des Hindernisses relativ zu dem Fahrzeug (1; 40; 50; 60), in Bezug auf einen zweiten an dem Fahrzeug (1; 40; 50; 60) angeordneten Ultraschallsensor (3; 4; 41; 51; 61), welcher den ersten Echopuls auch empfangen hat, und dessen relative Position zu dem ersten Ultraschallsensor bekannt ist,
- wodurch sich zwei neue Hypothesen (55', 56', 65, 66) für eine Position des Hindernisses (53; 62; 68; 75) ergeben und wobei diejenige Hypothese (45, 46, 55, 56, 63, 64) als wahr identifiziert wird, die mit einer der neuen Hypothesen (55', 56', 65, 66) zusammenfällt oder zumindest in deren unmittelbarer Nähe zu liegen kommt.

2. Verfahren nach Anspruch 1, wobei in der zweiten Messung mindestens ein weiterer Ultraschallpuls durch den ersten Ultraschallsensor (3; 4; 41; 51; 61) oder durch einen anderen an dem Fahrzeug (1; 40; 50; 60) angeordneten Ultraschallsensor (3; 4; 41; 51; 61) ausgesendet wird.

3. Verfahren nach Anspruch 2, wobei die Echosignale von dem aussendenden Ultraschallsensor (3; 4; 41; 51; 61) oder einem anderen an dem Fahrzeug (1; 40; 50; 60) angeordneten Ultraschallsensor (3; 4; 41; 51; 61) empfangen werden.

4. Verfahren nach einem der vorhergehenden Ansprüche, wobei die Empfangsfrequenzen mit Hilfe von Frequenzanalyseverfahren geschätzt werden.

5. Verfahren nach einem der vorhergehenden Ansprüche, wobei die Absolutwerte der Einfallswinkel in Abhängigkeit von der Empfangsfrequenz auf Basis eines abgespeicherten Kennfeldes ermittelt werden.

6. Verfahren nach Anspruch 5, wobei für jeden Ultraschallsensor (3; 4; 41; 51; 61) ein individuelles Kennfeld abgespeichert ist.

7. Verfahren nach einem der Ansprüche 5 oder 6, wobei die Kennfelder im Vorfeld der Inbetriebnahme empirisch mit Hilfe eines Regressionsmodells ermittelt werden.

8. Verfahren nach einem der vorhergehenden Ansprüche, wobei bei stehenden Hindernissen (53; 62; 68; 75)
- die Geschwindigkeit des Fahrzeuges (1; 40; 50; 60) bestimmt wird,
- die aufgrund des Doppler-Effektes durch die Fahrzeuggeschwindigkeit bewirkte Frequenzverschiebung berechnet wird und
- die durch den Doppler-Effekt bewirkte Frequenzverschiebung bei der Ermittlung der Absolutwerte der Einfallswinkel der Echopulse berücksichtigt wird.

9. Verfahren nach einem der vorhergehenden Ansprüche, wobei bei bewegten Hindernissen
- die Relativgeschwindigkeit zwischen dem Fahrzeug (1; 40; 50; 60) und dem Hindernis bestimmt wird,
- die aufgrund des Doppler-Effektes durch die Relativgeschwindigkeit bewirkte Frequenzverschiebung berechnet wird und
- die durch den Doppler-Effekt bewirkte Frequenzverschiebung bei der Ermittlung der Absolutwerte der Einfallswinkel der Echopulse berücksichtigt wird.

10. Verfahren nach einem der vorhergehenden Ansprüche, wobei zur Wahr-Identifizierung einer der Hypothesen ein Trackingverfahren, insbesondere Multi-Hypothesen-Tracking, eingesetzt wird.

11. Vorrichtung zur Bestimmung der Position eines Hindernisses (53; 62; 68; 75) relativ zu einem Fahrzeug (1; 40; 50; 60), insbesondere einem Kraftfahrzeug, zur Verwendung in einem Fahrerassistenzsystem des Fahrzeuges (1; 40; 50; 60) zur Parkraumvermessung mit
- mindestens einem an dem Fahrzeug angeordneten Ultraschallsender (3; 4; 41; 51; 61) zum Aussenden von mindestens einem Ultraschallpuls mit einer vorgegebenen Sendefrequenz,
- einen ersten an dem Fahrzeug angeordneten Ultraschallempfänger (3; 4; 41; 51; 61) zum Empfangen eines an dem Hindernis (53; 62; 68; 75) reflektierten Echopulses,
- einer Auswerteeinheit (6) zum Bestimmen der Empfangsfrequenz des empfangenen Echopulses, zum Ermitteln eines Absolutwertes eines Einfallswinkels des Echopulses in Bezug auf den ersten Ultraschallempfänger (3; 4; 41; 51; 61) in Abhängigkeit von der Empfangsfrequenz, zum Bestimmen eines Abstands des Hindernisses (44) relativ zu dem Fahrzeug (1; 40; 50; 60) auf Basis einer gemessenen Signallaufzeit des Echopulses zur Aufstellung von zwei Hypothesen für eine Position des Hindernisses (53; 62; 68; 75) aus dem Absolutwert des Einfallswinkels des Echopulses und der beiden möglichen Vorzeichen des Einfallswinkels und des auf Basis der gemessenen Signallaufzeit des Echopulses ermittelten Abstands,
und zur Identifizierung einer der Hypothesen als wahr,
- mit Hilfe eines Absolutwertes eines Einfallswinkels mindestens eines weiteren an dem Hindernis (53; 62; 68; 75) reflektierten Echopulses und eines weiteren auf Basis einer gemessenen Signallaufzeit des weiteren Echopulses ermittelten Abstands des Hindernisses relativ zu dem Fahrzeug (1; 40; 50; 60) bezüglich einer durch eine definierte Bewegung des Fahrzeugs veränderten Position des ersten Ultraschallsensors (3; 4; 41; 51; 61)
- oder mit Hilfe eines Absolutwertes eines Einfallswinkels bezüglich eines zweiten an dem Fahrzeug (1; 40; 50; 60) angeordneten Ultraschallsensors (3; 4; 41; 51; 61), welcher den ersten Echopuls auch empfangen hat und eines weiteren auf Basis einer gemessenen Signallaufzeit des weiteren Echopulses ermittelten Abstands des Hindernisses relativ zu dem Fahrzeug (1; 40; 50; 60),
wodurch sich zwei neue Hypothesen (55', 56', 65, 66) für eine Position des Hindernisses (53; 62; 68; 75) ergeben und wobei diejenige Hypothese (45, 46, 55, 56, 63, 64) als wahr identifiziert wird, die mit einer der neuen Hypothesen (55', 56', 65, 66) zusammenfällt oder zumindest in deren unmittelbarer Nähe zu liegen kommt.

## Claims

1. Method for determining the position of an obstacle (53; 62; 68; 75) relative to a vehicle (1; 40; 50; 60), in particular a motor vehicle, for use in parking space measurement in a driver assistance system of the vehicle (1; 40; 50; 60), in the case of which
- at least one ultrasonic pulse with a prescribed transmit frequency is emitted by means of an ultrasonic sensor (3; 4; 41; 51; 61) arranged on the vehicle (1; 40; 50; 60),
- the emitted ultrasonic pulse is reflected at the obstacle (53; 62; 68; 75) and is received again as first echo pulse by an ultrasonic sensor (3; 4; 41; 51; 61) arranged on the vehicle (1; 40; 50; 60),
- a receive frequency of the received echo pulse is determined,
- an absolute value of an incidence angle for the echo pulse with reference to the first ultrasonic sensor (3; 4; 41; 51; 61) is determined as a function of the receive frequency,
- the signal propagation time of the echo pulse is measured, and
- the distance of the obstacle (53; 62; 68; 75) relative to the vehicle (1; 40; 50; 60) is determined from the signal propagation time,
**characterized in that**
- the absolute value of the incidence angle of the echo pulse and the distance of the obstacle relative to the vehicle (1; 40; 50; 60) are used to set up two hypotheses (45, 46, 55, 56, 63, 64) for a position of the obstacle (53; 62; 68; 75) on the basis of the determined absolute value of the incidence angle and of the two possible algebraic signs of the incidence angle, and
- by employing a second measurement one of the hypotheses (45, 46, 55, 56, 63, 64) is identified as true
a) by determining an absolute value of an incidence angle of at least one further echo pulse reflected at the obstacle (53; 62; 68; 75) as well as of a further distance, determined on the basis of a measured signal propagation time of the further echo pulse, of the obstacle relative to the vehicle, the second measurement being performed given a position of the first ultrasonic sensor (3; 4; 41; 51; 61) altered by a movement of the vehicle, the alteration in the position of the first ultrasonic sensor (3; 4; 41; 51; 61) being known by comparison with the first measurement, or
b) by determining an absolute value of an incidence angle as well as of a distance, determined on the basis of a measured signal propagation time of an echo pulse, of the obstacle relative to the vehicle (1; 40; 50; 60) with reference to a second ultrasonic sensor (3; 4; 41; 51; 61) arranged on the vehicle (1; 40; 50; 60) which has also received the first echo pulse and the position of which relative to the first ultrasonic sensor is known,
- thus giving rise to two new hypotheses (55', 56', 65, 66) for a position of the obstacle (53; 62; 68; 75) and there being identified as true those hypotheses (45, 46, 55, 56, 63, 64) which coincide with one of the new hypotheses (55', 56', 65, 66) or at least come to lie in the immediate vicinity thereof.

2. Method according to Claim 1, in which in the second measurement at least one further ultrasonic pulse is emitted by the first ultrasonic sensor (3; 4; 41; 51; 61) or by another ultrasonic sensor (3; 4; 41; 51; 61) arranged on the vehicle (1; 40; 50; 60).

3. Method according to Claim 2, in which the echo signals are received from the emitting ultrasonic sensor (3; 4; 41; 51; 61) or from another ultrasonic sensor (3; 4; 41; 51; 61) arranged on the vehicle (1; 40; 50; 60).

4. Method according to one of the preceding claims, in which the receive frequencies are estimated with the aid of frequency analysis methods.

5. Method according to one of the preceding claims, in which the absolute values of the incidence angles are determined as a function of the receive frequency on the basis of a stored characteristic map.

6. Method according to Claim 5, in which an individual characteristic map is stored for each ultrasonic sensor (3; 4; 41; 51; 61).

7. Method according to either of Claims 5 and 6, in which the characteristic maps are determined empirically prior to the start with the aid of a regression model.

8. Method according to one of the preceding claims, in which, given stationary obstacles (53; 62; 68; 75),
- the speed of the vehicle (1; 40; 50; 60) is determined,
- the frequency shift caused on the basis of the Doppler effect by the vehicle speed is calculated, and
- the frequency shift caused by the Doppler effect is taken into account when determining the absolute values of the incidence angles of the echo pulses.

9. Method according to one of the preceding claims, in which, given stationary obstacles,
- the relative speed between the vehicle (1; 40; 50; 60) and the obstacle is determined,
- the frequency shift caused on the basis of the Doppler effect by the relative speed is calculated, and
- the frequency shift caused by the Doppler effect is taken into account when determining the absolute values of the incidence angles of the echo pulses.

10. Method according to one of the preceding claims, in which a tracking method, in particular multihypothesis tracking, is used to identify one of the hypotheses as true.

11. Device for determining the position of an obstacle (53; 62; 68; 75) relative to a vehicle (1; 40; 50; 60), in particular a motor vehicle, for use in parking space measurement in a driver assistance system of the vehicle (1; 40; 50; 60), having
- at least one ultrasonic transmitter (3; 4; 41; 51; 61), arranged on the vehicle, for emitting at least one ultrasonic pulse with a prescribed transmit frequency,
- a first ultrasonic receiver (3; 4; 41; 51; 61), arranged on the vehicle, for receiving an echo pulse reflected at the obstacle (53; 62; 68; 75),
- an evaluation unit (6) for determining the receive frequency of the received echo pulse, for determining an absolute value of an incidence angle of the echo pulse with reference to the first ultrasonic receiver (3; 4; 41; 51; 61) as a function of the receive frequency, for determining a distance of the obstacle (44) relative to the vehicle (1; 40; 50; 60) on the basis of a measured signal propagation time of the echo pulse for setting up two hypotheses for a position of the obstacle (53; 62; 68; 75) from the absolute value of the incidence angle of the echo pulse and the two possible algebraic signs of the incidence angle and of the distance determined on the basis of the measured signal propagation time of the echo pulse,
and for identifying one of the hypotheses as true
- with the aid of an absolute value of an incidence angle of at least one further echo pulse reflected at the obstacle (53; 62; 68; 75) and of a further distance, determined on the basis of a measured signal propagation time of the further echo pulse, of the obstacle relative to the vehicle (1; 40; 50; 60) with reference to a position, altered by a defined movement of the vehicle, of the first ultrasonic sensor (3; 4; 41; 51; 61)
- or with the aid of an absolute value of an incidence angle with reference to a second ultrasonic sensor (3; 4; 41; 51; 61) which is arranged on the vehicle (1; 40; 50; 60) and has also received the first echo pulse, and of a further distance, determined on the basis of a measured signal propagation time of the further echo pulse, of the obstacle relative to the vehicle (1; 40; 50; 60),
- thus giving rise to two new hypotheses (55', 56', 65, 66) for a position of the obstacle (53; 62; 68; 75) and there being identified as true those hypotheses (45, 46, 55, 56, 63, 64) which coincide with one of the new hypotheses (55', 56', 65, 66) or at least come to lie in the immediate vicinity thereof.

## Revendications

1. Procédé pour déterminer la position d'un obstacle (53 ; 62 ; 68 ; 75) par rapport à un véhicule (1 ; 40 ; 50 ; 60), notamment un véhicule automobile, destiné à être utilisé pour la mesure de l'espace de stationnement dans un système d'assistance au conducteur du véhicule (1 ; 40 ; 50 ; 60), selon lequel
- au moins une impulsion ultrasonique est émise à une fréquence d'émission prédéfinie au moyen d'un capteur à ultrasons (3 ; 4 ; 41 ; 51 ; 61) disposé sur le véhicule (1 ; 40 ; 50 ; 60),
- l'impulsion ultrasonique émise est réfléchie sur l'obstacle (53 ; 62 ; 68 ; 75) et de nouveau reçue sous la forme d'une première impulsion d'écho par un premier capteur à ultrasons (3 ; 4 ; 41 ; 51 ; 61) disposé sur le véhicule (1 ; 40 ; 50 ; 60),
- une fréquence de réception de l'impulsion d'écho reçue est déterminée,
- une valeur absolue d'un angle d'incidence de l'impulsion d'écho par rapport au premier capteur à ultrasons (3 ; 4 ; 41 ; 51 ; 61) est déterminée en fonction de la fréquence de réception,
- le temps de propagation du signal de l'impulsion d'écho est mesuré,
- la distance de l'obstacle (53 ; 62 ; 68 ; 75) par rapport au véhicule (1 ; 40 ; 50 ; 60) est déterminée à partir du temps de propagation du signal,
**caractérisé en ce que**
- deux hypothèses (45, 46, 55, 56, 63, 64) pour une position de l'obstacle (53 ; 62 ; 68 ; 75) sont établies à partir de la valeur absolue de l'angle d'incidence de l'impulsion d'écho et à partir de la distance de l'obstacle par rapport au véhicule (1 ; 40 ; 50 ; 60) en se basant sur la valeur absolue déterminée de l'angle d'incidence et des deux signes possibles de l'angle d'incidence et
- l'une des hypothèses (45, 46, 55, 56, 63, 64) est identifiée comme étant vraie par le biais d'une deuxième mesure
a) en déterminant une valeur absolue d'un angle d'incidence d'au moins une impulsion d'écho supplémentaire réfléchie sur l'obstacle (53 ; 62 ; 68 ; 75) ainsi qu'une distance supplémentaire de l'obstacle par rapport au véhicule, déterminée en se basant sur un temps de propagation de signal mesuré de l'impulsion d'écho supplémentaire, la deuxième mesure étant effectuée avec une position du premier capteur à ultrasons (3 ; 4 ; 41 ; 51 ; 61) modifiée par un mouvement du véhicule, la modification de la position du premier capteur à ultrasons (3 ; 4 ; 41 ; 51 ; 61) en comparaison de la première mesure étant connue, ou
b) en déterminant une valeur absolue d'un angle d'incidence ainsi qu'une distance de l'obstacle par rapport au véhicule (1 ; 40 ; 50 ; 60) déterminée en se basant sur un temps de propagation de signal mesuré d'une impulsion d'écho, en référence à un deuxième capteur à ultrasons (3 ; 4 ; 41 ; 51 ; 61) disposé sur le véhicule (1 ; 40 ; 50 ; 60) qui a également reçu la première impulsion d'écho et dont la position relative par rapport au premier capteur à ultrasons est connue,
- ce qui résulte en deux nouvelles hypothèses (55', 56', 65, 66) pour une position de l'obstacle (53 ; 62 ; 68 ; 75) et l'hypothèse (45, 46, 55, 56, 63, 64) qui coïncide avec l'une des nouvelles hypothèses (55', 56', 65, 66) ou au moins s'en approche de très près étant identifiée comme vraie.

2. Procédé selon la revendication 1, selon lequel, dans la deuxième mesure, au moins une impulsion ultrasonique supplémentaire est émise par le premier capteur à ultrasons (3 ; 4 ; 41 ; 51 ; 61) ou par un autre capteur à ultrasons (3 ; 4 ; 41 ; 51 ; 61) disposé sur le véhicule (1 ; 40 ; 50 ; 60).

3. Procédé selon la revendication 2, selon lequel les signaux d'écho sont reçus par le capteur à ultrasons (3 ; 4 ; 41 ; 51 ; 61) émetteur ou un autre capteur à ultrasons (3 ; 4 ; 41 ; 51 ; 61) disposé sur le véhicule (1 ; 40 ; 50 ; 60).

4. Procédé selon l'une des revendications précédentes, selon lequel les fréquences de réception sont estimées à l'aide de procédés d'analyse des fréquences.

5. Procédé selon l'une des revendications précédentes, selon lequel les valeurs absolues des angles d'incidence sont déterminées en fonction de la fréquence de réception sur la base d'un diagramme caractéristique mis en mémoire.

6. Procédé selon la revendication 5, selon lequel un diagramme caractéristique individuel est mis en mémoire pour chaque capteur à ultrasons (3 ; 4 ; 41 ; 51 ; 61).

7. Procédé selon l'une des revendications 5 ou 6, selon lequel les diagrammes caractéristiques sont déterminés empiriquement avant la mise en service à l'aide d'un modèle de régression.

8. Procédé selon l'une des revendications précédentes, selon lequel, en présence d'obstacles (53 ; 62 ; 68 ; 75) immobiles
- la vitesse du véhicule (1 ; 40 ; 50 ; 60) est déterminée,
- le décalage de fréquence provoqué par la vitesse du véhicule en raison de l'effet Doppler est calculé et
- le décalage de fréquence provoqué par l'effet Doppler est pris en compte lors de la détermination des valeurs absolues des angles d'incidence des impulsions d'écho.

9. Procédé selon l'une des revendications précédentes, selon lequel, en présence d'obstacles mobiles
- la vitesse relative entre le véhicule (1 ; 40 ; 50 ; 60) et l'obstacle est déterminée,
- le décalage de fréquence provoqué par la vitesse relative en raison de l'effet Doppler est calculé et
- le décalage de fréquence provoqué par l'effet Doppler est pris en compte lors de la détermination des valeurs absolues des angles d'incidence des impulsions d'écho.

10. Procédé selon l'une des revendications précédentes, selon lequel un procédé de suivi, notamment de suivi d'hypothèses multiples, est utilisé pour l'identification de l'une des hypothèses comme étant vraie.

11. Dispositif pour déterminer la position d'un obstacle (53 ; 62 ; 68 ; 75) par rapport à un véhicule (1 ; 40 ; 50 ; 60), notamment un véhicule automobile, destiné à être utilisé dans un système d'assistance au conducteur du véhicule (1 ; 40 ; 50 ; 60) pour la mesure de l'espace de stationnement, comprenant
- au moins un émetteur d'ultrasons (3 ; 4 ; 41 ; 51 ; 61) disposé sur le véhicule pour émettre au moins une impulsion ultrasonique à une fréquence d'émission prédéfinie,
- un premier récepteur d'ultrasons (3 ; 4 ; 41 ; 51 ; 61) disposé sur le véhicule pour recevoir une impulsion d'écho réfléchie sur l'obstacle (53 ; 62 ; 68 ; 75),
- une unité d'interprétation (6) pour déterminer la fréquence de réception de l'impulsion d'écho reçue, pour déterminer une valeur absolue d'un angle d'incidence de l'impulsion d'écho par rapport au premier récepteur d'ultrasons (3 ; 4 ; 41 ; 51 ; 61) en fonction de la fréquence de réception, pour déterminer une distance de l'obstacle (44) par rapport au véhicule (1 ; 40 ; 50 ; 60) en se basant sur un temps de propagation de signal mesuré de l'impulsion d'écho en vue d'établir deux hypothèses pour une position de l'obstacle (53 ; 62 ; 68 ; 75) à partir de la valeur absolue de l'angle d'incidence de l'impulsion d'écho et des deux signes possibles de l'angle d'incidence et de la distance déterminée en se basant sur le temps de propagation de signal mesuré de l'impulsion d'écho,
et en vue d'identifier l'une des hypothèses comme étant vraie,
- à l'aide d'une valeur absolue d'un angle d'incidence d'au moins une impulsion d'écho supplémentaire réfléchie sur l'obstacle (53 ; 62 ; 68 ; 75) ainsi que d'une distance supplémentaire de l'obstacle par rapport au véhicule (1 ; 40 ; 50 ; 60), déterminée en se basant sur un temps de propagation de signal mesuré de l'impulsion d'écho supplémentaire, en référence à une position du premier capteur à ultrasons (3 ; 4 ; 41 ; 51 ; 61) modifiée par un mouvement défini du véhicule,
- ou à l'aide d'une valeur absolue d'un angle d'incidence en référence à un deuxième capteur à ultrasons (3 ; 4 ; 41 ; 51 ; 61) disposé sur le véhicule (1 ; 40 ; 50 ; 60) qui a également reçu la première impulsion d'écho et une distance supplémentaire de l'obstacle par rapport au véhicule (1 ; 40 ; 50 ; 60) déterminée en se basant sur un temps de propagation de signal mesuré de l'impulsion d'écho supplémentaire,
ce qui résulte en deux nouvelles hypothèses (55', 56', 65, 66) pour une position de l'obstacle (53 ; 62 ; 68 ; 75) et l'hypothèse (45, 46, 55, 56, 63, 64) qui coïncide avec l'une des nouvelles hypothèses (55', 56', 65, 66) ou au moins s'en approche de très près étant identifiée comme vraie.
